## Europäisches Patentamt

## European Patent Office

## Office européen des brevets

(11) Veröffentlichungsnummer: **0 031 976**
**B1**

(12) # EUROPÄISCHE PATENTSCHRIFT

(45) Veröffentlichungstag der Patentschrift:
09.11.83

(51) Int. Cl.³: **G 11 B 15/29**

(21) Anmeldenummer: **80201197.3**

(22) Anmeldetag: **15.12.80**

(54) **Bandaufzeichnungs- oder Wiedergabegerät mit einer auf einem verschwenkbaren Arm angeordneten Andruckrolle.**

(30) Priorität: **21.12.79 AT 8112/79**

(43) Veröffentlichungstag der Anmeldung:
**15.07.81 Patentblatt 81/28**

(45) Bekanntmachung des Hinweises auf die Patenterteilung:
**09.11.83 Patentblatt 83/45**

(84) Benannte Vertragsstaaten:
**AT CH DE FR GB LI NL**

(56) Entgegenhaltungen:
**DE - B - 1 266 527**
**FR - A - 2 193 228**
**US - A - 3 838 459**
**US - A - 3 877 627**

**PATENTS ABSTRACTS OF JAPAN, Band 2, Nr. 143, 25. November 1978, Seite 8990E78**

(73) Patentinhaber: **N.V. Philips' Gloeilampenfabrieken, Groenewoudseweg 1, NL-5621 BA Eindhoven (NL)**

(72) Erfinder: **Rupp, Karl, p/A INT. OCTROOIBUREAU B.V. Prof. Holstlaan 6, NL-5656 AA Eindhoven (NL)**
Erfinder: **Ruyten, Henricus, p/A OCTROOIBUREA B.V. Prof. Holstlaan 6, NL-5656 AA Eindhoven (NL)**

(74) Vertreter: **Smit, Frederik Jan et al, INTERNATIONAAL OCTROOIBUREAU B.V. Prof. Holstlaan 6, NL-5656 AA Eindhoven (NL)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Bandaufzeichnungs- oder Wiedergabegerät mit einer auf einem verschwenkbaren Arm angeordneten Andruckrolle

Die Erfindung bezieht sich auf ein Aufzeichnungs- und/oder Wiedergabegerät für einen bandförmigen Aufzeichnungsträger, mit einer Antriebswelle, die zum Fortbewegen des Aufzeichnungsträgers mit einer auf einem Arm angeordneten Andruckrolle zusammenarbeitet, welcher Arm um eine Schwenkachse verschwenkbar ist, um die Andruckrolle zwischen mindestens einer Ruhelage und einer Betriebslage zu bewegen, in welchen Lagen die Andruckrolle in einem Abstand von bzw. an der Antriebswelle anliegt, wobei der Arm durch ein Federelement mit einem mit dem Arm gemeinsam um die genannte Schwenkachse verschwenkbaren Hebel verbunden ist, der zum Verschwenken des Hebels mit einer Betätigungseinrichtung zusammenarbeitet, wobei der Hebel zugleich gegenüber dem Arm verschwenkbar ist und durch Spannen des Federelementes die Andruckrolle in der Betriebslage gegen die Antriebswelle drückt. Bei einem Gerät dieser Art, das aus der deutschen Patentschrift 1 266 527 bekannt ist, sind der Arm und der Hebel um nur ein und dieselbe Achse verschwenkbar angeordnet. Abhängig von dem gewählten Hebelverhältnis wird durch diese Anordnung der von der Betätigungseinrichtung zurückzulegende Verstellweg zum Überführen der Andruckrolle von ihrer Ruhelage in die Betriebslage, als auch die von der Betätigungseinrichtung aufzubringende Kraft zum Spannen des Federelementes, das die Andruckkraft zum Andrücken der Andruckrolle an die Antriebswelle liefert, erhalten. In diesem Zusammenhang ist es oft erwünscht, daß der obengenannte Verstellweg für den Hebel, an den die Betätigungseinrichtung angreift, möglichst gering und die aufzubringende Kraft zum Spannen des Federelementes möglichst klein ist, welche Anforderungen bei einem einzigen Hebel einander im wesentlichen widersprechen.

Die Erfindung hat nun zur Aufgabe, die obengenannten Schwierigkeiten zu beseitigen und bei einem relativ kleinen Verstellweg zum Betätigen des Hebels zum Überführen der Andruckrolle von ihrer Ruhelage in ihre Betriebslage auch zu erreichen, daß nur eine relativ kleine Kraft zum Spannen des die Andruckkraft zum Andrücken der Andruckrolle an die Antriebswelle bewirkenden Federelementes benötigt wird. Bei einem Gerät der eingangs erwähnten Art wird dies erfindungsgemäß dadurch erreicht, daß die Verschwenkung des Hebels gegenüber dem Arm um jeweils gegenüber der gemeinsamen Schwenkachse in geringerem Abstand von der Andruckrolle liegende erste und zweite Schwenkachsen erfolgt, welche Schwenkachsen einen Teil einer ersten bzw. zweiten Lagerkonstruktion bilden, deren Lagerfunktion abhängig von der von der Betätigungseinrichtung verursachten Schwenkbewegung des Hebels in einander abwechselnder Reihenfolge aufgehoben bzw. hergestellt werden kann, wobei durch Verschwenkung des Hebels um die Schwenkachse der zweiten Lagerkonstruktion das Federelement gespannt bzw. entspannt wird. Auf diese Weise wird erreicht, daß beim Überführen der Andruckrolle von ihrer Ruhelage in ihre Betriebslage und beim darauf erfolgenden Andrücken der Andruckrolle an die Antriebswelle ein Wechsel hinsichtlich der Schwenkachse für den Hebel erfolgt, so daß zwei unterschiedliche Hebelübersetzungen entstehen. Eine erste Hebelübersetzung tritt auf für das Überführen der Andruckrolle bis zum Anliegen an der Antriebswelle und eine zweite Hebelübersetzung tritt auf zum Spannen des Federelementes zum Andrücken der Andruckrolle an die Antriebswelle. Dadurch ist es möglich, das Hebelübersetzungsverhältnis vorerst so zu wählen, daß mit einem relativ geringen Verstellweg für einen Hebelarm des Hebels, an dem die Betätigungseinrichtung angreift, ein großer Verstellweg erreicht wird für die Andruckrolle, damit diese aus ihrer Ruhelage in ihre Betriebslage verstellt werden kann, wonach bei einem anderen Hebelübersetzungsverhältnis mit einer geringen Kraft von der Betätigungseinrichtung das Federelement zum Andrücken der Andruckrolle an die Antriebswelle gespannt wird. Dadurch, daß die Lagerfunktion der ersten Lagerkonstruktion erst entsteht nach dem Anliegen der Andruckrolle an der Antriebswelle und darauf die Lagerfunktion der zweiten Lagerkonstruktion erst entsteht nach dem Verschwenken des Hebels um die Schwenkachse der ersten Lagerkonstruktion, wird gewährleistet, daß die erste und die zweite Lagerkonstruktion beim Verschwenken des Arms und des Hebels um die gemeinsame Schwenkachse zum Verstellen der Andruckrolle aus ihrer Ruhelage in ihre Betriebslage sich nicht störend auswirken. Dadurch kann dieser Verstellweg der Andruckrolle beliebig groß gemacht werden.

In einer bevorzugten Ausführungsform wird die erste Lagerkonstruktion durch eine zwischen dem Arm und dem Hebel vorhandene Stift-Loch-Verbindung gebildet, wobei es zwischen dem Stift und dem Loch einen derart großen Spielraum gibt, daß der Kontakt des Stiftes mit der Wand des Loches und folglich die Lagerfunktion der Lagerkonstruktion aufgehoben werden kann. So kann auf einfache Weise ein Aufheben bzw. Herstellen der Lagerfunktion der ersten Lagerkonstruktion erhalten werden.

Es hat sich als vorteilhaft herausgestellt, wenn die zweite Lagerkonstruktion durch einen mit dem Hebel verbundenen Haken und ein geräteseitiges Widerlager gebildet wird, wobei das Widerlager eine Nase aufweist, die in dem Schwenkbereich des Hakens beim Verschwenken des Hebels um die Schwenkachse der ersten Lagerkonstruktion liegt. So wird auf zuverlässige Weise das Aufheben bzw. Herstellen der Lagerfunktion der zweiten Lagerkonstruktion verwirklicht. Dabei kann beispielsweise der Haken mit dem Hebel fest verbunden sein, wobei dann der Angriffspunkt des Hakens an der Nase die Schwenkachse der zweiten Lagerkonstruktion bildet.

In dem obengenannten Zusammenhang hat es sich als besonders vorteilhaft erwiesen, wenn die Schwenkachse der zweiten Lagerkonstruktion durch ein sich parallel zu der Schwenkachse der ersten Lagerkonstruktion erstreckendes Scharnier in der Verbindung zwischen dem Haken und dem Hebel gebildet wird, und daß es auf dem Hebel im Bereich des Scharniers einen sich parallel zu dem Stift der ersten Lagerkonstruktion erstreckenden anderen Stift gibt, der an einer einen Teil des Arms bildenden Führungsfläche anliegt, über die der andere Stift beim Verschwenken des Hebels um die Schwenkachse der ersten Lagerkonstruktion geführt wird, und welche Führungsfläche den anderen Stift beim weiteren Verschwenken des Hebels unterstützt. Damit wird erreicht, daß nicht der in einem Abstand von dem Hebel liegende Angriffspunkt des Hakens an der Nase die Schwenkachse der zweiten Lagerkonstruktion bildet, sondern der an die Führungsfläche sich abstützende von dem Haken festgehaltene andere Stift, wodurch die Schwenkachse der zweiten Lagerkonstruktion in Richtung des Hebels verstellt ist. Dies bietet den Vorteil, daß der Hebel beim Spannen des Federelementes keine in der Längsrichtung des Hebels gerechnet relative Bewegung gegenüber dem die Andruckrolle tragenden Arm macht, wodurch das Federelement ohne wesentliche Verschiebung seiner Federachse gespannt wird. Um den Haken mit der Nase zusammenarbeiten zu lassen beim Verstellen des Hebels um die Schwenkachse der ersten Lagerkonstruktion kann dabei das Scharnier durch ein streifenförmiges Filmscharnier gebildet werden, das den Haken in Ruhelage der Andruckrolle eine Vorzugslage einnehmen läßt. Ein derartiges auf einfache Weise herzustellendes streifenförmiges Filmscharnier stellt sich nämlich in unbelastetem Zustand immer auf ein und dieselbe bevorzugte Situation ein. Auf zweckmäßige Weise kann auch noch vorgesehen werden, daß der Haken zum Erhalten der durch das Filmscharnier festgelegten Vorzugslage federnd gegen einen auf dem Hebel vorgesehenen Begrenzungsanschlag gehalten wird. Damit ist sowohl eine einfache Konstruktion für das Scharnier als auch eine genau definierte Vorzugslage für den Haken gegeben.

Ebenfalls als vorteilhaft hat sich erwiesen, wenn die zweite Lagerkonstruktion einen Vorsprung auf dem Hebel und ein Widerlager auf dem Gerät umfaßt, wobei der Vorsprung auf dem Hebel durch eine mit dem freien Ende sich parallel zu der Schwenkachse der ersten Lagerkonstruktion erstreckenden Rippe gebildet wird um das Widerlager auf dem Gerät durch eine in dem Schwenkbereich des freien Endes der Rippe beim Verschwenken des Hebels um die Schwenkachse der ersten Lagerkonstruktion liegende, sich parallel zu der letztgenannten Schwenkachse erstreckende rinnenförmige Unterstützung gebildet wird. Auch eine derartige Konstruktion ist in ihrem Aufbau einfach und ergibt eine sichere zweite Lagerkonstruktion für den Hebel.

Es hat sich als vorteilhaft erwiesen, wenn wenigstens beim mit dem Arm Schwenken um die gemeinsame Schwenkachse der Hebel an dem Arm anliegt und zum Gewährleisten dieser Lage eine zwischen dem Hebel und dem Arm wirksame lösbare Rastvorrichtung vorhanden ist. Dadurch ist gewährleistet, daß der Arm und der Hebel nicht ungewollt gegenüber einander verschwenken können, solange nicht die Andruckrolle in ihre Betriebslage übergeführt ist. Beispielsweise kann eine solche Rastvorrichtung durch eine zwischen dem Arm und dem Hebel wirksame Kugelrast gebildet sein. Als besonders einfach hat sich jedoch erwiesen, wenn die Rastvorrichtung durch einen federnden weiteren Haken gebildet wird.

Es hat sich als vorteilhaft erwiesen, wenn auf dem Arm eine Nocke angeordnet ist, die sich in Richtung des freien Endes der Antriebswelle gesehen, an einer geräteseitigen, senkrecht zur Antriebswelle verlaufenden und im Bereich derselben vorgesehenen Auflagefläche gleitend abstützt und das zwischen dem Arm und dem Hebel wirksame Federelement schräg verlaufend angeordnet ist, wobei die Federachse in der Betriebslage der Andruckrolle im wesentlichen durch den Schnittpunkt einer durch den Auflagepunkt der Nocke an der Auflagefläche gehenden, senkrecht zur Auflagefläche verlaufenden Geraden mit der senkrecht zur Antriebswelle verlaufenden Symmetrieebene der Andruckrolle hindurchgeht. Auf diese Weise ist erreicht, daß die Nocke durch ihre Abstützung an der Auflagefläche Kraftkomponenten, die in Richtung der Antriebswelle wirksam sind, aufnimmt und die Andruckrolle daher wie gewünscht nur durch eine Kraft an die Antriebswelle angedrückt wird, die in der senkrecht zur Antriebswelle verlaufenden Symmetrieebene der Andruckrolle wirksam ist, wodurch ein einwandfreies Fortbewegen des Aufzeichnungsträgers gewährleistet ist.

Die Erfindung wird untenstehend an Hand der Zeichnung, in der einige Ausführungsbeispiele der Erfindung dargestellt sind, auf welche sie jedoch nicht beschränkt sein soll, näher erläutert. Es zeigt

Fig. 1 auf schematischer Weise in Draufsicht einen Ausschnitt eines Aufzeichnungs- und/oder Wiedergabegerätes nach der Erfindung, welcher den Verlauf eines Aufzeichnungsträgers zwischen einer Antriebswelle und einer mit dieser in Wirkverbindung bringbaren Andruckrolle erkennen läßt,

Fig. 2 bis 7 von einem ersten Ausführungsbeispiel eines Gerätes nach der Erfindung einzelne Bewegungsphasen einer auf einem Arm angeordneten und von einem Hebel her verschwenkbaren Andruckrolle von ihrer Ruhelage in ihre Betriebslage,

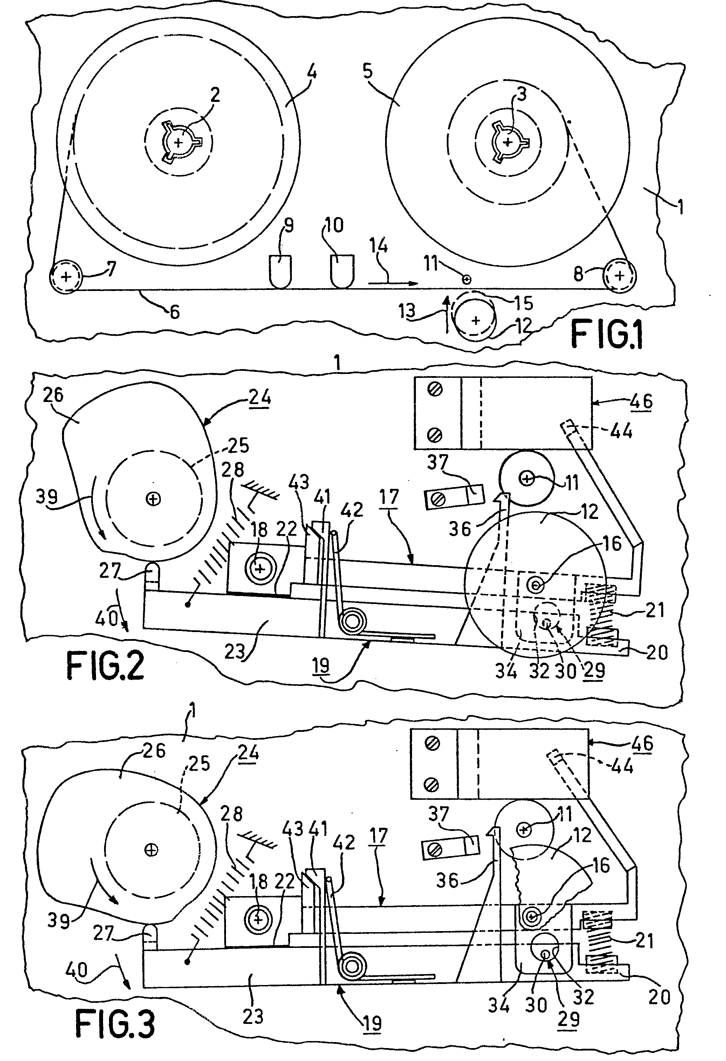

Fig. 2 eine erste Ruhelage mit relativ weit von der Antriebswelle weggeschwenkter Andruckrolle,

Fig. 3 eine zweite Ruhelage, in der die Andruckrolle relativ nahe an die Antriebswelle herangeführt ist,

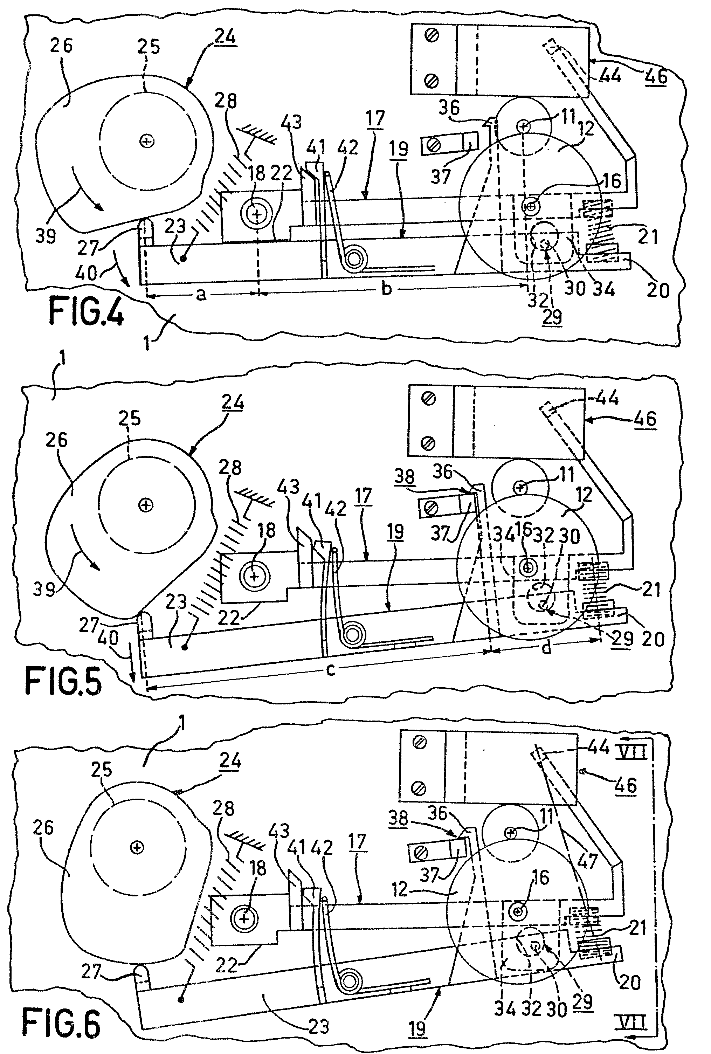

Fig. 4 eine Lage, in der die Andruckrolle an der Antriebswelle angelegt, ein die Andruckkraft lieferndes Federelement noch nicht gespannt und der Hebel um eine erste Lagerung am Arm verschwenkbar ist,

Fig. 5 eine Lage, wie in Fig. 4 dargestellt, wobei jedoch der Hebel gegenüber dem Arm so weit verschwenkt ist, daß mit einem am Hebel fest angeordneten, mit einer geräteseitigen Haltenase zusammenwirkenden Haken die Lagerfunktion einer zweiten Lagerkonstruktion für den Hebel gebildet ist,

Fig. 6 die Betriebslage der Andruckrolle mit um die zweite Lagerkonstruktion verschwenktem Hebel und gespanntem Federelement zum Andrücken der Andruckrolle an die Antriebswelle,

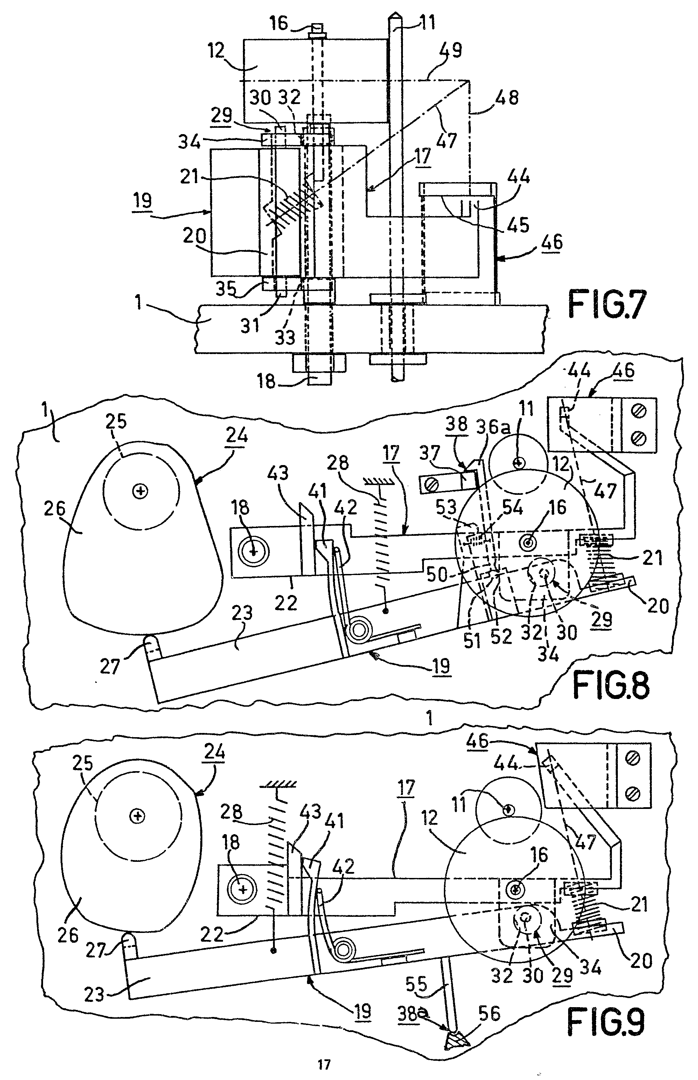

Fig. 7 einen Schnitt der Linie VII-VII in Fig. 6,

Fig. 8 in der gleichen Bewegungsphase wie in Fig. 6 ein zweites Ausführungsbeispiel eines erfindungsgemäßen Gerätes, wobei ein am Hebel verschwenkbar angeordneter Haken zur Bildung der Lagerfunktion der zweiten Lagerkonstruktion dient,

Fig. 9 in der gleichen Bewegungsphase wie in Fig. 6 ein Ausführungsbeispiel eines Gerätes nach der Erfindung, wobei eine am Hebel angeordnete, mit einer rinnenförmigen Abstützung zusammenwirkende Rippe zur Bildung der Lagerfunktion der zweiten Lagerkonstruktion dient.

In Fig. 1 ist mit 1 das Chassis eines Aufzeichnungs- und/oder Wiedergabegerät bezeichnet, welches wahlweise antreibbare Wickeldorne 2 und 3 trägt, auf welche Spulen 4 und 5 aufsetzbar sind. Die Spule 4 dient dabei als Vorratsspule für einen Aufzeichnungsträger 6, der über zwei Umlenkrollen 7 und 8 zur als Aufwickelspule dienenden Spule 5 verläuft. Im Bereich zwischen den beiden Umlenkrollen 7 und 8 passiert der Aufzeichnungsträger 6 Magnetköpfe 9 und 10 und verläuft dabei zwischen einer von einem Motor her antreibbaren Antriebswelle 11 und einer Andruckrolle 12. In Fig. 1 ist die Andruckrolle 12 in einer Ruhelage dargestellt, in welcher sie relativ weit von der Antriebswelle 1 abgehoben bzw. weggeschwenkt ist, in welchem Fall der Aufzeichnungsträger leicht zwischen die Antriebswelle und die Andruckrolle eingeführt werden kann, ohne daß dabei eine Fortbewegung des Aufzeichnungsträgers erfolgt. Wird die Andruckrolle 12 in Richtung des Pfeiles 13 in ihre Betriebslage übergeführt, in welcher sie an die Antriebswelle 11 und den zwischen ihr und der Antriebswelle 11 verlaufenden Aufzeichnungsträger 6 angedrückt wird, so erfolgt die Fortbewegung des Aufzeichnungsträgers 6 in Richtung des Pfeiles 14, wobei er dann von der Vorratsspule 4 abgewickelt und auf die von einem Motor her angetriebene Aufwickelspule 5 aufgewickelt wird.

Die in Fig. 1 dargestellte Ruhelage der Andruckrolle 12 entspricht einer Betriebsart STOP des Geräts. Üblicherweise ist noch eine zweite Ruhelage für die Andruckrolle 12 vorgesehen, in der sie nur etwas von der Antriebswelle 11 abgehoben ist, so daß der Aufzeichnungsträger gerade nicht fortbewegt wird. Diese zweite Ruhelage der Andruckrolle 12, die in Fig. 1 schematisch durch den strichlierten Kreis 15 angedeutet ist, entspricht der Betriebsart PAUSE des Gerätes. Von dieser zweiten Ruhelage der Andruckrolle 12 aus ist nunmehr ein geringer Verstellweg erforderlich, um sie rasch an die Antriebswelle 11 andrücken und damit die Fortbewegung des Aufzeichnungsträgers einleiten zu können. In Zusammenhang mit der vorliegenden Erfindung ist es ohne Bedeutung, ob eine solche zweite Ruhelage der Andruckrolle 12 vorgesehen ist oder nicht, da sich die Erfindung insbesondere auf Maßnahmen richtet, um eine Andruckrolle über einen größeren Verstellweg zwischen einer Ruhelage und der Betriebslage zu verstellen und in letzterer an die Antriebswelle anzudrücken. Vollständigkeitshalber wird jedoch untenstehend auch eine solche zweite Ruhelage der Andruckrolle 12 beschrieben.

Ist die Andruckrolle 12 an die Antriebswelle 11 angelegt, so ist sie an diese mit einer vorgegebenen Kraft anzudrücken, um zu gewährleisten, daß der Aufzeichnungsträger 6 einwandfrei fortbewegt wird. Diese Kraft zum Andrücken der Andruckrolle 12 an die Antriebswelle 11 wird dabei üblicherweise durch das Spannen eines Federelementes aufgebracht, das entweder als Druckfeder oder als Zugfeder ausgebildet sein kann. Zum Verstellen der Andruckrolle dient dabei meist ein Hebel, der seinerseits von einer Betätigungseinrichtung her verstellbar ist. An eine solche Betätigungseinrichtung wird daher die Anforderung gestellt, daß vorerst ein relativ großer Verstellweg für die Andruckrolle 12 zu erfolgen hat, wozu nur geringe Kräfte erforderlich sind, da der Bewegung der Andruckrolle praktisch kein Widerstand entgegenwirkt, wonach dann aber von der Betätigungseinrichtung her eine relativ große Kraft aufzubringen ist, um das Federelement zu spannen, das dann das Andrücken der Andruckrolle an die Antriebswelle bewirkt. Es handelt sich also dabei um zwei Vorgänge mit unterschiedlichen Funktionen, nämlich einerseits eine große Wegübersetzung und andererseits eine große Kraftübersetzung zu ermöglichen. Dabei besteht noch eine weitere Anforderung an eine solche Betätigungseinrichtung darin, daß die beiden vorgenannten Vorgänge mit einem möglichst geringen Hub der Betätigungseinrichtung ausführbar sein sollen, um auch für die Betätigungseinrichtung selbst eine einfache Konstruktion zu erhalten.

Zur Realisierung der obenstehend angeführten Anforderungen ist erfindungsgemäß vorgesehen, daß in Zuge der Verstellbewegung der Andruckrolle und zwar nachdem sie an der Antriebswelle zum Anliegen gekommen ist, automatisch eine Änderung des Übersetzungsverhältnisses eines von der Betätigungseinrichtung her verschwenkbaren, die Verstellung der Andruckrolle und ihr Andrücken an die Antriebswelle bewirkenden Hebels vorgenommen wird. Bei dem Ausführungsbeispiel nach den Fig. 2 bis 7 ist die Andruckrolle 12 um eine Achse 16 drehbar auf einem Arm 17 angeordnet, der seinerseits um eine geräteseitige Achse 18 schwenkbar ist. Fig. 2 zeigt dabei die Andruckrolle 12 in ihrer ersten Ruhelage, in der sie relativ weit von der Antriebswelle 11 weggeschwenkt ist. Am Arm 17 ist ferner ein Hebel 19 schwenkbar angeordnet. Zwischen einem Hebelarm 20 des Hebels 19 und dem Arm 17 ist ein durch eine Druckfeder 21 gebildetes Federelement wirksam, das bestrebt ist, den Hebel 19 am Arm 17 angelegt zu halten. Der Arm 17 und der Hebel 19 sind dabei nebeneinander verlaufend angeordnet und eine Seitenfläche 22 am Arm 17 dient als Anschlag für den Hebel 19, an welcher sich dieser mit seinem anderen Hebelarm 23 abstützt. Mit diesem Hebelarm 23 steht der Hebel 19 weiterhin mit einer Betätigungseinrichtung 24 in Wirkverbindung. Im betreffenden Fall besteht diese Betätigungseinrichtung 24 aus einer von einem Motor 25 antreibbaren Kurvenscheibe 26, an deren Umfang ein am Hebelarm 23 des Hebels 19 angebrachter Stift 27 unter dem Einfluß einer am Hebel 19 angreifender Feder 28 angelegt gehalten ist, so daß der Hebel 19 dem Verlauf der Kurvenscheibe 26 folgt. Selbstverständlich könnte die Betätigungseinrichtung 24 aber auch anders ausgebildet sein, wie beispielsweise in Form einer Drucktastensteuerung oder einer Elektromagnetsteuerung.

Zur verschwenkbaren Anordnung des Hebels 19 am Arm 17 ist eine erste Lagerkonstruktion 29 vorgesehen, die durch ein Stift-Loch-Verbindung gebildet ist. Deutlichkeitshalber ist in Fig. 3 der überwiegende Teil der Andruckrolle 12 weggeschnitten, um diese erste Lagerkonstruktion besser zu zeigen, die in Fig. 7 auch in Seitenansicht zu sehen ist. Die Stift-Loch-Verbindung besteht dabei aus zwei am Hebel 19 vorgesehenen koaxialen Stiften 30 und 31 und aus zwei Löchern 32 und 33, die ihrerseits in je einem Lappen 34 bzw. 35 vorgesehen sind, wobei die Lappen 34 und 35 vom Arm 17 seitlich ausragen und dabei den Hebel 19 umgreifen. Zwischen den Löchern 32 und 33 und den Stiften 30 bzw. 31 gibt es einen derart großen Spielraum, daß der Kontakt der Stifte mit den Wänden der Löcher und damit die Lagerfunktion der ersten Lagerkonstruktion aufgehoben werden kann. In der Ruhelage der Andruckrolle hält die zwischen dem Arm 17 und dem Hebelarm 20 des Hebels 19 wirksame Feder die Stifte an den Lochwänden angelegt, womit diese erste Lagerkonstruktion im Grunde bereit ist, eine Schwenkachse für den Hebel 19 gegenüber dem Arm 17 zu bilden. In der Ruhelage der Andruckrolle stützt sich dabei der Hebel 19 mit seinem Hebelarm 23 auch am Anschlag 22 des Arms 17 ab, so daß der Hebel 19 und der Arm 17 eine um die gemeinsame Schwenkachse 18 des Hebels 17 schwenkbare Einheit bildet, ohne daß die Lagerfunktion der ersten Lagerkonstruktion 29 wirksam wird.

Ferner ist am Hebel 19, hier im Bereich seitlich der erstgenannten Lagerkonstruktion 29, ein im wesentlichen quer zum Hebel verlaufender, von diesem vorspringender Ansatz vorgesehen, der beim vorliegenden Ausführungsbeispiel durch einen am Hebel 19 ortsfest angeordneten Haken 36 gebildet ist. Am Chassis 1 ist für den Haken 36 ein feststehendes Widerlager vorgesehen, das wie eine Haltenase 37 in Form eines L-förmigen Winkels gebildet ist, mit welcher der Haken 36 beim Verschwenken des Hebels 19 um die erste Lagerkonstruktion 29 in Wirkverbindung kommt. Dabei stützt sich der Haken 36 an die Haltenase 37 ab und kann diese festhalten, siehe Fig. 5 und 6. Auf diese Weise ist eine zweite Lagerkonstruktion 38 zum weiteren Verschwenken des Hebels 19 gebildet, wobei dann die erste Lagerkonstruktion 29 zwischen dem Hebel 19 und dem Arm 17 unter Abhebung des Stiftes 30 bzw. 31 von der Lochwand 32 bzw. 33 der Stift-Loch-Verbindung aufgehoben wird.

Untenstehend wird die Wirkungsweise beim Überführen der Andruckrolle 12 aus ihrer ersten Ruhelage, wie diese in Fig. 2 dargestellt ist, in ihre Betriebslage, in der sie unter der Wirkung der Feder 21 an die Antriebswelle 11 angedrückt ist, näher erläutert. Das Verschwenken der Andruckrolle wird durch Einschalten des Motors 25 der Betätigungseinrichtung 24 von geräteseitigen Steuerorganen her eingeleitet, die hier nicht näher dargestellt sind. Beispielsweise kann dies von einer Drucktastensteuerung des Gerätes her geschehen oder von einem Mikroprozessor aus erfolgen, der die verschiedenen Betriebsarten des Gerätes steuert. Nach dem Einschalten des Motors 25 beginnt sich die Kurvenscheibe 26 in Richtung des Pfeiles 39 zu drehen. Dadurch, daß der Hebel 19 mit seinem Stift 27 an dieser Kurvenscheibe 26 unter der Wirkung der Feder 28 angelegt gehalten ist, folgt der Hebel 19 dem Verlauf der Kurvenscheibe 26, wobei der Hebelarm 23 in Richtung des Pfeiles 40 entsprechend verschwenkt wird. Während dieser Bewegungsphase sind der Hebel 19 und der Arm 17 unter dem Einfluß der Feder 21 miteinander verbunden, so daß beide um die gemeinsame Schwenkachse 18 verschwenkt werden. Dadurch entsteht für die Verstellbewegung der Andruckrolle 12 ein Hebelübersetzungsverhältnis a : b, wie dies in Fig. 4 angegeben ist. Wie ersichtlich, ist der Abstand a kleiner als der Abstand b, was zur Folge hat, daß mit einem kleinen Verstellweg von der Kurvenscheibe 26 her ein großer Verstellweg für die Andruckrolle 12 erreicht wird.

Um zu gewährleisten, daß der Arm 17 und der Hebel 19 während dieses Bewegungsvorganges tatsächlich die Bewegung gemeinsam um die Achse 18 ausführen und der Hebelarm 23 des Hebels 19 am Anschlag 22 des Arms 17 sicher anliegt, ist zur Unterstützung der Feder 21, die dies bewirkt, am Hebel 19 noch ein weiterer Haken 41 angeordnet, der unter dem Einfluß einer ebenfalls am Hebel 19 vorgesehenen Feder 42 mit seinem hakenförmigen Ende hinter einen am Arm 17 vorgesehenen Ansatz 43 eingerastet ist. Auf diese Weise ist zwischen dem Arm 17 und dem Hebel 19 eine lösbare Rastvorrichtung gebildet, die ein sicheres Anliegen des Hebelarms 23 am Anschlag 22 des Arms 17 gewährleistet. Eine derartige Rastvorrichtung könnte auch anders ausgebildet sein, beispielsweise durch eine Kugelrast. Auch könnte der Haken 41 und die Feder 42 am Arm 17 und der Ansatz 43 am Hebel 19 vorgesehen sein.

Wie beschrieben, wird die Andruckrolle 12 in Richtung der Antriebswelle 11 hin mit dem Hebelübersetzungsverhältnis a : b verstellt, wobei die Andruckrolle in die in Fig. 3 gezeigte zweite Ruhelage gelangt. Je nachdem, ob die Betätigungsvorrichtung 24 zu diesem Zeitpunkt abgeschaltet oder weiter eingeschaltet bleibt, verbleibt die Andruckrolle 12 in dieser zweiten Ruhelage oder wird sie weiter in Richtung zur Antriebswelle 11 hin verstellt. Wird die Andruckrolle 12 weiter in Richtung zur Antriebswelle 11 hin verstellt, so kommt sie schließlich an dieser zur Anlage. Diese Bewegungsphase zeigt Fig. 4. Sobald die Andruckrolle 12 an der Antriebswelle 11 anliegt, ist der Arm 17 dadurch festgehalten, und kann daher an den weiteren Bewegungsabläufen nicht mehr teilnehmen. Wie aus Fig. 4 ersichtlich, hat in dieser Lage der Hebel 19 eine Position erreicht, in der das freie Ende des an ihm angeordneten Hakens 36, vom Hebel 19 aus gesehen, im Bereich hinter die am Chassis 1 angebrachte, als Wiederlager dienende Haltenase 37 zu liegen kommt. Durch das Anliegen der Andruckrolle 12 an der Antriebswelle 11 hat die Andruckrolle an sich bereits ihre Betriebslage erreicht, aber es erfolgt noch kein entsprechend starkes Andrücken an die Antriebswelle.

Dreht sich die Kurvenscheibe 26 weiter, so wird auf den Hebel 19 eine entsprechende Kraft zu seinem weiteren Verschwenken ausgeübt. Da nun der Arm 17 feststeht, wird die Lagerfunktion der ersten Lagerkonstruktion zwischen dem Hebel 19 ud dem Arm 17 wirksam. Dies bedeutet, daß der Hebel 19 weiter in Richtung des Pfeiles 40 verschwenkt wird, und zwar nunmehr um einen durch die erste Lagerung 29 bestimmten Drehpunkt. Der weitere Haken 41 am Hebel 19 löst sich dabei vom Ansatz 43 am Arm 17, wodurch die Rastverbindung zwischen dem Arm 17 und dem Hebel 19 gelöst, die Lagerfunktion der Achse 18 für den Hebel 19 aufgehoben wird, wobei der Hebel 19 an sich verstellt werden kann. Bei dieser Verstellung des Hebels 19 kommt nun der Haken 36 mit der Haltenase 37 in Wirkverbindung und stützt sich dabei an derselben ab, wie dies Fig. 5 zeigt.

Dadurch, daß der Haken 36 an der Haltenase 37 abstützt, ist die Lagerfunktion der zweiten Lagerkonstruktion 38 für den Hebel 19 gebildet, die jetzt für eine weitere Verschwenkung des Hebels 19 eine Schwenkachse festlegt. Damit ist für die weitere Verschwenkung des Hebels 19 dessen Unterstützungsverhältnis durch die in Fig. 5 angegebenen Abschnitte c : d gegeben. Da dabei c größer ist als d, liegt nunmehr ein Kraftübersetzungsverhältnis vor, das es gestattet, mit einer kleinen Kraft am Hebelarm 23 eine große Kraft am Hebelarm 20 aufzubringen. Dieses Übersetzungsverhältnis wird nun dazu ausgenützt, die Feder 21 zu spannen und zwar soweit zu spannen, die erforderliche Kraft zum Andrücken der Andruckrolle 12 an die Antriebswelle 11 vorliegt. Dazu wird der Hebel 19 weiter von der Kurvenscheibe 24 her verschwenkt, wobei die Lagerfunktion der zweiten Lagerkonstruktion 38 wirksam ist und gleichzeitig die Lagerfunktion der ersten Lagerkonstruktion 29 am Arm 17 dadurch aufgehoben wird, daß sich der Stift 30 bzw. 31 von der Lochwand 32 bzw. 33 abhebt, wie dies Fig. 6 zeigt. Die Feder 21 ist nunmehr gespannt und die Andruckrolle 12 wird in ihrer Betriebslage mit der gewünschten Kraft an die Antriebswelle 11 angedrückt.

Wie ersichtlich ist, ist somit beim Überführen der Andruckrolle 12 von ihrer Ruhelage in ihre Betriebslage ein Wechsel im Übersetzungsverhältnis der Teile des Hebels 19 erfolgt. Dieser Wechsel ist derart, daß mit einem relativ geringen Hub von der Betätigungseinrichtung bei einem ersten Verhältnis die Andruckrolle rasch an der Antriebswelle anliegt, wonach bei einem zweiten Verhältnis mit einem relativ geringen Kraftaufwand von der Betätigungsvorrichtung her die Feder gespannt wird, um die gewünschte Kraft zum Andrücken der Andruckrolle an die Antriebswelle aufzubringen.

Um die Antriebswelle wieder von ihrer Betriebslage in ihre erste oder zweite Ruhelage überzuführen, erfolgt der gesamte Bewegungsablauf in analoger Weise in umgekehrter Richtung dadurch, daß die Kurvenscheibe 26 nun vom Motor 25 in der zum Pfeil 39 entgegengesetzten Richtung angetrieben wird. In diesem Fall wird zuerst die Feder 21 entspannt, danach die Lagerfunktion der zweiten Lagerkonstruktion 38 aufgehoben, die Lagerfunktion der ersten Lagerkonstruktion 29 gebildet, bis der Hebel 19 mit seinem Hebelarm 23 wieder am Anschlag 22 des Arms 17 anliegt, der Haken 42 hinter den Ansatz 43 einrastet, dadurch die Lagerfunktion der Achse 18 für den Hebel 19 wirksam macht und zum Schluß durch eine gemeinsame Verschwenkung des Arms 17 und des Hebels 19 um die Achse 18 die Andruckrolle 12 wieder von der Antriebswelle 11 abgehoben und bis in eine von ihren beiden Ruhelagen verstellt wird.

Es sei betont, daß es eine Reihe von Möglichkeiten gibt zum Ausbilden und Anordnen des Arms 17, des Hebels 19 und der ersten und zweiten Lagerkonstruktion 29 bzw. 38, um der obenstehend erläuterten Wirkungsweise im Rahmen der Erfindung gerecht zu werden. So könnte beispielsweise die Angriffsstelle der Betätigungseinrichtung 24 am Hebel 19 auch beim Haken 41 liegen. Ebenso könnte der Haken 36 an einer anderen Stelle des Hebels 19 angeordnet sein. Alle diesen Ausführungsformen richten sich danach, welche beiden Übersetzungsverhältnisse für den Hebel 19 gewünscht werden. Weiterhin könnte der Arm 17 und der Hebel 19 auch übereinander liegend angeordnet sein, wobei dann beispielsweise die erste Lagerkonstruktion 29 einfach aus einer Stift-Loch-Verbindung mit einem einzigen Stift und einem einzigen Loch bestehen kann. Auch die Formgebung des Loches für die Stift-Loch-Verbindung kann weitgehend beliebig gewählt werden, wenn sichergestellt ist, daß es genügend Spielraum gibt, um den Stift von der Lochwand abzuheben, was beispielsweise auch bei einem dreieckförmigen Loch möglich ist, wobei dann die Lage des Stiftes im Falle des Wirksamseins der ersten Lagerkonstruktion 29 durch eine Ecke des dreieckförmigen Loches besonders genau festgelegt sein kann.

Damit die Fortbewegung des Aufzeichnungsträgers exakt erfolgt und namentlich keine Verschiebung des Aufzeichnungsträgers in der Breitenrichtung auftritt, ist es besonders wichtig, daß die Andruckrolle 12 exakt an die Antriebswelle 11 angedrückt wird. Demgemäß soll das Andrücken der Andruckrolle durch eine Kraft erfolgen, die in der senkrecht zur Antriebswelle liegenden Symmetrieebene der Andruckrolle verläuft. Dazu wäre im vorliegenden Fall eine ganz spezielle Lage der Feder 21 erforderlich, die aus konstruktiven Gründen nicht ohne weiteres möglich ist. Um diese Schwierigkeiten zu beseitigen, ist die Feder 21, wie insbesondere aus Fig. 7 ersichtlich ist, schräg verlaufend zwischen dem Arm 17 und dem Hebelarm 20 des Hebels 19 angeordnet. Weiterhin ist am Arm 17 eine Nocke 44 vorgesehen, die sich in Richtung des freien Endes der Antriebswelle 11 gesehen, an einer geräteseitigen, senkrecht zur Antriebswelle 11 verlaufenden und im Bereich derselben vorgesehenen Auflagefläche 45 gleitend abstützt. Beim vorliegenden Ausführungsbeispiel ist diese Auflagefläche 45 durch einen S-förmigen Winkel 46 gebildet, der am Chassis 1 befestigt ist. An sich ist es auch möglich, die Auflagefläche 45 beispielsweise unmittelbar durch das Chassis 1 oder durch einen aus dem Chassis herausgebogenen S-förmigen Lappen zu bilden. Die Anordnung der Feder 21 ist dabei so getroffen, daß die Achse 47 in der Betriebslage der Andruckrolle 12 im wesentlichen durch den Schnittpunkt einer durch den Auflagepunkt der Nocke 44 an der Auflagefläche 45 gehenden, senkrecht zur Auflagefläche 45 verlaufenden Geraden 48 mit der senkrecht zur Antriebswelle verlaufenden Symmetrieebene 49 der Andruckrolle hindurchgeht, wie dies auch Fig. 7 erkennen läßt.

Auf diese Weise ist erreicht, daß die von der Feder 21 ausgeübte Kraft in zwei Komponenten zerfällt, von welchen eine Komponente in Richtung der Geraden 48 zum freien Ende der Antriebswelle hinweisend verläuft und die andere Komponente in der Symmetrieebene 49 liegt. Die Kraftkomponente in Richtung der Geraden 48 drückt dabei die Nocke 44 an die Auflagefläche 45 an und wird von dieser Auflagefläche 45 aufgenommen, so daß sie hinsichtlich des Andrückens der Andruckrolle 12 an die Antriebswelle 11 nicht mehr wirksam ist. Die andere, in der Symmetrieebene 49 der Andruckrolle verlaufende Kraftkomponente der Feder 21 bewirkt für sich allein das Andrücken der Andruckrolle 12 an die Antriebswelle 11, womit sichergestellt ist, daß die Fortbewegung des Aufzeichnungsträgers exakt und namentlich genau in der Längsrichtung erfolgt, da keine unerwünschte, in Richtung der Antriebswelle verlaufende Kraftkomponente auf ihn einwirkt.

Beim Ausführungsbeispiel nach Fig. 8, in der die Andruckrolle in ihrer Betriebslage und die Antriebswelle angedrückt gezeigt ist, ist zur Bildung der zweiten Lagerkonstruktion 38 wieder ein mit einer Haltenase 37 zusammenwirkender Haken 36a vorgesehen. Der Haken 36a ist mit einem parallel zur Schwenkachse der ersten Lagerkonstruktion 29 wirksamen Scharnier 50 gelenkig mit dem Hebel 19 verbunden. Weiterhin ist am Hebel 19 bei diesem Scharnier 50 ein parallel zum Stift 30 verlaufender weiterer Stift 51 vorgesehen, der an einer am Arm 17 vorgesehenen Führungsfläche 52 anliegt, entlang welcher er beim Verschwenken des Hebels 19 um die Schwenkachse der ersten Lagerkonstruktion 29 gleitet und die ihn beim weiteren Verschwenken des Hebels 19 unterstützt. Beim vorliegenden Ausführungsbeispiel ist diese Führungsfläche 52 durch eine Seitenfläche des Lappens 34 gebildet, in dem die Bohrung 32 der die erste Lagerkonstruktion 29 bildenden Stift-Loch-Verbindung vorgesehen ist. An sich wäre es beispielsweise aber auch möglich, diese Führungsfläche 52 durch einen entsprechenden Schlitz im Lappen 34 zu bilden.

Auf diese Weise ist erreicht, daß nicht mehr wie in dem ersten Ausführungsbeispiel, unmittelbar der Angriffspunkt des Hakens 36 am Widerlager 37 den Drehpunkt für die zweite Lagerkonstruktion bildet, sondern der sich an der Führungsfläche 52 abstützende Stift 51, der dabei vom Haken 36 festgehalten wird. Dadurch ist aber die Schwenkachse der zweiten Lagerkonstruktion 38 zum Hebel 19 hin verlegt, so daß dieser bei seinem weiteren Verschwenken zum Spannen der Feder 21 nahezu keine in Längsrichtung des Hebels 19 gesehene Relativbewegung gegenüber dem Arm 17 ausführt. Dies bietet den Vorteil, daß die Feder 21 ohne wesentliche Verschiebung ihrer Federachse 47 gespannt wird.

Damit der Haken 36a beim Verschwenken des Hebels 19 um die Schwenkachse der ersten Lagerkonstruktion 29 mit der Haltenase 37 in Wirkverbindung tritt, muß dafür gesorgt werden, daß der Haken 36a in den Lagen, in denen er nicht mit der Haltenase 37 in Wirkverbindung ist, eine bestimmte Vorzugslage einnimmt, wie dies auch obenstehend bei dem mit dem Hebel 19 verbundenen Haken 36 der Fall ist. Eine solche Vorzugslage wird zweckmäßigerweise dadurch erreicht, daß als Scharnier 50 ein streifenförmiges Filmscharnier verwendet wird, wie in Fig. 8 dargestellt. Ein solche Filmscharnier hat nicht nur den Vorteil der einfachen Herstellung dadurch, daß der Hebel 19 das Scharnier 50 und der Haken 36a aus einem Kunststoffteil bestehen können, sondern auch den weiteren Vorteil, daß ein solches Filmscharnier in unbelastetem Zustand stets eine vorgegebene Lage einnimmt und damit auch für den Haken 36a eine Vorzugslage festlegt. Beim vorliegenden Ausführungsbeispiel ist aber zusätzlich noch zur Sicherung der durch das Filmscharnier festgelegten Vorzugslage des Hakens ein Begrenzungsanschlag 53 am Hebel 19 vorgesehen, zu dem der Haken 36a mit einer Feder 54 hingezogen wird, so daß die Vorzugslage des Hakens 36a eindeutig festgelegt ist. Aus Fig. 8 ist auch ersichtlich, daß der Haken 36a in geringem Abstand vom Begrenzungsanschlag 53 entfernt ist, wie dies der Fall ist, wenn die zweite Lagerkonstruktion 38 wirksam und die Andruckrolle 12 in ihrer Betriebslage an die Antriebswelle 11 angedrückt ist, da ja in vorliegendem Fall die Schwenkachse der zweiten Lagerkonstruktion durch den von der Führungsfläche 52 abgestützten und vom Haken 36a gehaltenen Stift 51 gebildet ist.

Die einzelnen Bewegungsabläufe zum Überführen der Andruckrolle von einer ihrer Ruhelagen in ihre Betriebslage erfolgen beim vorliegenden Ausführungsbeispiel in analoger Weise, wie sie beim vorhergehend beschriebenen Ausführungsbeispiel an Hand der Fig. 2 bis 6 erläutert werden.

Beim Ausführungsbeispiel nach Fig. 9 ist der am Hebel 19 vorgesehene Ansatz zur Bildung der zweiten Lagerkonstruktion 38a durch eine mit ihrem freien Ende parallel zum Stift 30 der ersten Lagerkonstruktion 29 verlaufende Rippe 55 gebildet. In diesem Fall besteht das geräteseitige Widerlager aus einer im Schwenkbereich des freien Endes der Rippe 55, beim Verschwenken des Hebels 19 um die Schwenkachse der ersten Lagerkonstruktion 29 liegenden parallel zur Schwenkachse der ersten Lagerkonstruktion 29 verlaufenden rinnenförmigen Abstützung 56. Sobald die Andruckrolle an die Antriebswelle 11 angelegt ist und der Hebel 19 um die Schwenkachse der ersten Lagerkonstruktion 29 verschwenkt wird, gelangt das frei der Rippe 55 mit der rinnenförmigen Abstützung 56 in Wirkverbindung und stützt sich in deren Rinne ab. Damit ist wieder die Lagerfunktion einer zweiten Lagerkonstruktion 38a für den Hebel 19 gebildet, um die er weiterverschwenkt wird, wobei dann die Lagerfunktion der ersten Lagerkonstruktion 29 durch Abheben des Stiftes 30 von der Lochwand 32 aufgehoben wird. Im Zuge dieses weiteren Verschwenkens des Hebels 19 wird dann wieder die Feder 21 gespannt und das Andrücken der Andruckrolle 12 an die Antriebswelle 11 bewirkt. Im übrigen erfolgen die Bewegungsabläufe zum Überführen der Andruckrolle von einer ihrer Ruhelagen in ihre Betriebslage wieder analog wie diejenigen, wie sie im Zusammenhang mit dem Ausführungsbeispiel nach den Fig. 2 bis 7 beschrieben wurden.

## Patentansprüche

1. Aufzeichnungs- und/oder Wiedergabegerät für einen bandförmigen Aufzeichnungsträger, mit einer Antriebswelle (11), die zum Fortbewegen des Aufzeichnungsträgers mit einer auf einem Arm (17) angeordneten Andruckrolle (12) zusammenarbeitet, welcher Arm um eine Schwenkachse (18) verschwenkbar ist um die Andruckrolle zwischen mindestens einer Ruhelage und einer Betriebslage zu bewegen, in welchen Lagen die Andruckrolle in einem Abstand von bzw. an der Antriebswelle anliegt, wobei der Arm durch ein Federelement (21) mit einem mit dem Arm gemeinsam um die genannte Schwenkachse (18) verschwenkbaren Hebel (19) verbunden ist, der zum Verschwenken des Hebels mit einer Betätigungseinrichtung (24) zusammenarbeitet, wobei der Hebel zugleich gegenüber dem Arm verschwenkbar ist und durch Spannung des Federelements die Andruckrolle in der Betriebslage gegen die Antriebswelle drückt, dadurch gekennzeichnet, daß die Verschwenkung des Hebels (19) gegenüber dem Arm (17) um jeweils gegenüber der gemeinsamen Schwenkachse (18) in geringerem Abstand von der Andruckrolle (12) liegende erste und zweite Schwenkachsen erfolgt, welche Schwenkachsen einen Teil einer ersten bzw. zweiten Lagerkonstruktion (29 bzw. 38, 38a) bilden, deren Lagerfunktion abhängig von der von der Betätigungseinrichtung (24) verursachten Schwenkbewegung des Hebels (19) in einander abwechselnder Reihenfolge aufgehoben bzw. gebildet werden kann, wobei durch Verschwenkung des Hebels um die Schwenkachse der zweiten Lagerkonstruktion (38, 38a) das Federelement (2) gespannt bzw. entspannt wird.

2. Gerät nach Anspruch 1, dadurch gekennzeichnet, daß die erste Lagerkonstruktion (29) durch eine zwischen dem Arm (17) und dem Hebel (19) vorhandene Stift-Loch-Verbindung gebildet wird, wobei es zwischen dem Stift (30, 31) und dem Loch (32, 34) einen derart großen Spielraum gibt, daß der Kontakt des Stiftes mit der Wand des Loches und folglich die Lagerfunktion der Lagerkonstruktion aufgehoben werden kann.

3. Gerät nach Anspruch 1 oder 2, dadurch gekennzeichnet, daß die zweite Lagerkonstruktion (38) durch einen mit dem Hebel (19) verbundenen Haken (36, 36a) und ein geräteseitiges Widerlager (37) gebildet wird, wobei das Widerlager eine Nase aufweist, die in dem Schwenkbereich des Hakens beim Verschwenken des Hebels um die Schwenkachse der ersten Lagerkonstruktion (29) liegt.

4. Gerät nach Anspruch 3, dadurch gekennzeichnet, daß die Schwenkachse der zweiten Lagerkonstruktion (38) durch ein sich parallel zu der Schwenkachse der ersten Lagerkonstruktion (29) erstreckendes Scharnier (50) in der Verbindung zwischen dem Haken (36a) und dem Hebel (19) gebildet wird und daß es auf dem Hebel im Bereich des Scharniers einen sich parallel zu dem Stift (30) der ersten Lagerkonstruktion (29) erstreckenden anderen Stift (51) gibt, der an einer einen Teil des Arms bildenden Führungsfläche (52) anliegt, über die der andere Stift beim Verschwenken des Hebels um die Schwenkachse der ersten Lagerkonstruktion (29) geführt wird, und welche Führungsfläche den anderen Stift beim weiteren Verschwenken des Hebels unterstützt.

5. Gerät nach Anspruch 4, dadurch gekennzeichnet, daß das Scharnier durch ein streifenförmigen Filmscharnier (50) gebildet ist, das den Haken (36a) in der Ruhelage der Andruckrolle (12) eine Vorzugslage einnehmen läßt.

6. Gerät nach Anspruch 5, dadurch gekennzeichnet, daß der Haken (36a) zum Erhalten der durch das Filmscharnier (50) festgelegten Vorzugslage federnd gegen einen auf dem Hebel (19) vorgesehenen Begrenzungsanschlag (53) gehalten wird.

7. Gerät nach Anspruch 1 oder 2, dadurch gekennzeichnet, daß die zweite Lagerkonstruktion (38a) einen Vorsprung auf dem Hebel (19) und ein Widerlager auf dem Gerät umfaßt, wobei der Vorsprung auf dem Hebel durch eine mit dem freien Ende sich parallel zu der Schwenkachse der ersten Lagerkonstruktion (29) erstreckenden Rippe (55) gebildet wird, und das Widerlager auf dem Gerät durch eine im Schwenkbereich des freien Endes der Rippe beim Verschwenken des Hebels um die Schwenkachse der ersten Lagerkonstruktion liegende, sich parallel zu der letztgenannten Schwenkachse erstreckende rinnenförmigen Unterstützung (56) gebildet wird.

8. Gerät nach einem der vorstehenden Ansprüche, dadurch gekennzeichnet, daß wenigstens beim mit dem Arm (17) Schwenken um die gemeinsame Schwenkachse (18) der Hebel (19) an dem Arm (17) anliegt und zum Gewährleisten dieser Lage eine zwischen dem Hebel und dem Arm wirksame lösbare Rastvorrichtung (41, 43) vorhanden ist.

9. Gerät nach Anspruch 8, dadurch gekennzeichnet, daß die Rastvorrichtung durch einen federnden weiteren Haken (41) gebildet wird.

10. Gerät nach einem der vorstehenden Ansprüche, dadurch gekennzeichnet, daß auf dem Arm (17) eine Nocke (44) angeordnet ist, die sich in Richtung des freien Endes der Antriebswelle (12) gesehen, an einer geräteseitigen, senkrecht zur Antriebswelle verlaufenden und in im Bereich derselben vorgesehenen Auflagefläche (45) gleitend abstützt, und das zwischen dem Arm (17) und dem Hebel (19) wirksame Federelement (21) schräg verlaufend angeordnet ist, wobei die Federachse (47) in der Betriebslage der Andruckrolle (12) im wesentlichen durch den Schnittpunkt einer durch den Auflagepunkt der Nocke an der Auflagefläche gehenden, senkrecht zur Auflagefläche verlaufenden Geraden (48) mit der senkrecht zur Antriebswelle verlaufenden Symmetrieebene (49) der Andruckrolle hindurchgeht.

**Claims**

1. A recording and/or reproducing apparatus for a record carrier in the form of a tape, which apparatus comprises a capstan (11) which for transporting the record carrier cooperates with a pressure roller (12) arranged on an arm (17) which is pivotable about a pivot spindle (18) so as to enable the pressure roller to be moved between at least a rest position and an operating position, in which positions the pressure roller is respectively spaced from and positoned against the capstan, the arm being connected by a resilient element (21) to a lever (19) which is pivotable about the said pivot spindle (18) together with the arm, which for pivoting the lever cooperates with an actuating device (24), the lever also being pivotable relative to the arm and, under the influence of the resilient element, urging the pressure roller into the operating position against the capstan, characterized in that the lever (19) is pivoted relative to the arm (17) about first and second pivot spindles which, relative to the common pivot spindle (18), are situated at a smaller distance from the pressure roller (12), and which form part of first and second bearing arrangements (29 and 38, 38a) respectively, whose bearing functions can be cancelled and established respectively depending on the pivotal movement of the lever (19) caused by the actuating device (24), the resilient element (21) being tensioned or released by the pivoted movement of the lever about the pivot spindle of the second bearing arrangement (38, 38a).

2. An apparatus as claimed in Claim 1, characterized in that the first bearing arrangement (29) comprises a pin-and-hole connection provided between the arm (17) and the lever (19), the clearance between the pin (30, 31) and the hole (32, 34) being such that the pin can be made to disengage from the wall of the hole, thereby rendering the bearing function of the bearing arrangement inoperative.

3. An apparatus as claimed in Claim 1 or 2, characterized in that the second bearing arrangement (38) comprises a hook (36, 36a) connected to the lever (19) and an abutment (37) arranged on the apparatus, the abutment comprising a nose which is situated in the pivoting path of the hook when the lever is pivoted about the pivot spindle of the first bearing arrangement (29).

4. An apparatus as claimed in Claim 3, characterized in that the pivot spindle of the second bearing arrangement (38) comprises a hinge (50) in the connection between the hook (36a) and the lever (19), which hinge extends parallel to the pivot spindle of the first bearing arrangement (29), and in that on the lever near the hinge there is provided a further pin (51) which extends parallel to the pin (30) of the first bearing arrangement (29), which further pin is positioned against a guide surface (52) which forms part of the arm and along which the further pin is guided when the lever is pivoted about the pivot spindle of the first bearing arrangement (29) and which guide surface supports said further pin when the lever is pivoted further.

5. An apparatus as claimed in Claim 4, characterized in that the hinge is constituted by a strip-shaped integral hinge (50) which causes the hook (36a) to occupy a preferred position in the rest position of the pressure roller (12).

6. An apparatus as claimed in Claim 5, characterised in that, in order to obtain the preferred position defined by the integral hinge (50), the hook (36a) is resiliently urged against a stop (53) provided on the lever (19).

7. An apparatus as claimed in Claim 1 or 2, characterized in that the second bearing arrangement (38a) comprises a projection on the lever (19) and an abutment on the apparatus, the projection on the lever comprising a rib (55) whose free end extends parallel to the pivot spindle of the first bearing arrangement (29) and the abutment on the apparatus comprising a trough-shaped support (56) which extends parallel to the pivot spindle of the first bearing arrangement and which is situated in the pivoting path of the free end of the rib when the lever is pivoted about the last-mentioned pivot spindle.

8. An apparatus as claimed in any one of the preceding Claims, characterized in that at least during the pivoted movement of the arm (17) about the common pivoting spindle (18) the lever (19) is positioned against the arm (17) and, in order to maintain this position, there is provided a disengagable latching device (41, 43) between the arm and the lever.

9. An apparatus as claimed in Claim 8, characterized in that the latching device comprises by a resilient further hook (41).

10. An apparatus as claimed in any one of the preceding Claims, characterized in that on the arm (17) there is provided a projection (44) which, viewed in the direction of the free end of the capstan (12), bears slidably on a supporting surface (45) provided on the apparatus, which surface extends perpendicularly to the capstan and is situated near said capstan, and in that the resilient element (21) which acts between the arm (17) and the lever (19) is arranged obliquely, the spring axis (47) substantially passing through the intersection of a straight line (48) through the point of contact of the projection with the supporting surface at right angles to said supporting surface, and the plane of symmetry (49) of the pressure roller, which plane extends perpendicularly to the capstan in the operating position of the pressure roller.

**Revendications**

1. Appareil d'enregistrement et/ou de reproduction pour un porteur d'enregistrement en forme de bande comprenant un arbre d'entraînement (11) qui, pour faire défiler le porteur d'enregistrement, coopère avec un galet presseur (12) monté sur un bras (17), ce bras pouvant pivoter autour d'un axe de pivotement (18) pour déplacer le galet presseur entre au moins une position de repos et une position de travail dans lesquelles le galet presseur est respectivement écarté de l'arbre d'entraînement et appliqué contre celui-ci, le bras étant relié par un élément élastique (21) à un levier (19) qui peut pivoter en compagnie du bras autour du dit axe de pivotement (18) et qui, en vue du pivotement du levier, coopère avec un dispositif d'actionnement (24), étant entendu que le levier peut simultanément pivoter par rapport au bras et presser le galet presseur dans sa position de travail contre l'arbre d'entraînement par la tension de l'élément élastique, caractérisé en ce que le pivotement du levier (19) par rapport au bras (17) s'effectue chaque fois autour d'un premier et d'un second axe de pivotement situé à une distance du galet presseur (12) qui est plus courte que celle de l'axe de pivotement commun (18), ces axes de pivotement faisant partie respectivement d'une première et d'une seconde construction de palier (29 et 38, 38a) dont la fonction de palier peut resepctivement être annulée et rétablie en alternance en fonction du mouvement de pivotement du levier (19) provoqué par le dispositif d'actionnement (24), étant entendu que le pivotement du levier autour de l'axe de pivotement de la seconde construction de palier (38, 38a) a pour effet de tendre ou de détendre l'élément élastique (2).

2. Appareil suivant la revendication 1, caractérisé en ce que la première construction de palier (29) est formée par une liaison à tourillon et trou présente entre le bras (17) et le levier (19), étant entendu qu'entre le tourillon (30, 31) et le trou (32, 34) est prévu un jeu tel que le contact du tourillon avec le bord du trou et par conséquent la fonction de palier de la construction de palier, puissent être supprimés.

3. Appareil suivant la revendication 1 ou 2, caractérisé en ce que la seconde construction de palier (38) est formée par un loquet (36, 36a) relié au levier (19) et par un mentonnet (37) fixé sur le châssis de l'appareil, le mentonnet présentant un bec qui, lorsque le levier pivote autour de l'axe de pivotement de la première construction de palier (29), se trouve dans la zone de pivotement du loquet.

4. Appareil suivant la revendication 3, caractérisé en ce que l'axe de pivotement de la seconde construction de palier (38) est formé par une charnière (50) s'étendant parallèlement à l'axe de pivotement de la première construction de palier (29) dans la liaison entre le loquet (36a) et le levier (19) et, sur le levier, dans la zone de la charnière, est prévu un autre tourillon (51) qui s'étend parallèlement au tourillon (30) de la première construction de palier et qui est appliqué contre une surface de guidage (52) faisant partie du bras et sur laquelle cet autre tourillon se déplace lors du pivotement du levier autour de l'axe de pivotement de la première construction de palier (29), cette surface de guidage supportant l'autre tourillon lorsque le levier pivote danvantage.

5. Appareil suivant la revendication 4, caractérisé en ce que la charnière est formée par une charnière pelliculaire en forme de bande (50) qui permet au loquet (36a) d'occuper une position préférentielle dans la position de repos du galet presseur (12).

6. Appareil suivant la revendication 5, caractérisé en ce que le loquet (36a) est maintenu élastiquement contre une butée de fin de course (53) prévue sur le levier (19) pour obtenir la position préférentielle établie par la charniére pelliculaire (50).

7. Appareil suivant la revendication 1 ou 2, caractérisé en ce que la seconde construction de palier (38, 38a) comporte une saillie sur le levier (19) et une butée sur l'appareil, la saillie du levier étant formée par une ailette (55) dont l'extrémité libre s'étend parallèlement à l'axe de pivotement de la première construction de palier (29) et la butée étant formée par un support à rainure (56) placé dans la zone de pivotement de l'extrémité libre de l'ailette lors du pivotement du levier autour de l'axe de pivotement de la première construction de palier et s'étendant parallèlement à l'axe de pivotement mentionné en dernier lieu.

8. Appareil suivant l'une quelconque des revendications précédentes, caractérisé en ce qu'au moins lorsque le bras (17) pivote autour de l'axe de pivotement commun (18), le levier (19) s'applique contre le bras (17) et, pour garantir cette position, un dispositif à déclic libérable (41, 43) est présent entre le levier et le bras.

9. Appareil suivant la revendication 8, caractérisé en ce que le dispositif à déclic est formé par un autre loquet (41) élastique.

10. Appareil suivant l'une quelconque des revendications précédentes, caractérisé en ce que sur le bras (17) est prévue une saillie (44) qui, vue dans le sens de l'extrémité libre de l'arbre d'entraînement (12), s'appuie à coulissement contre une surface d'appui (45) prévue sur le châssis de l'appareil perpendiculairement à l'arbre d'entraînement et dans la zone de celui-ci et l'élément élastique (21) agissant entre le bras (17) et le levier (19) est disposé obliquement, de sorte que l'axe de rappel ou de sollicitation élastique (47), dans la position de travail du galet presseur (12), passe essentiellement par le point d'intersection d'une ligne droite (48) passant par le point d'appui de la saillie sur la surface d'appui et perpendiculaire à cette surface d'appui avec le plan de symétrie (49) du galet presseur perpendiculaire à l'arbre d'entraînement.

FIG.1

FIG.2

FIG.3

FIG.4

FIG.5

FIG.6

FIG.7

FIG.8

FIG.9